# EUROPEAN PATENT SPECIFICATION

(11) **EP 4 202 096 B1**
(45) Date of publication and mention of the grant of the patent: **18.09.2024**
(21) Application number: 22182497.2
(22) Date of filing: 01.07.2022
(51) Int. Cl.: D03D 49/60, D03D 47/30

(54) **LOOM WITH FIXING DEVICE FOR SUPPORT BODY**
WEBMASCHINE MIT BEFESTIGUNGSVORRICHTUNG FÜR STÜTZKÖRPER
MÉTIER À TISSER DOTÉE D'UN DISPOSITIF DE FIXATION DE CORPS DE SUPPORT

(30) Priority: 23.12.2021 JP 2021209840
(43) Date of publication of application: 28.06.2023
(73) Proprietor: KABUSHIKI KAISHA TOYOTA JIDOSHOKKI, Kariya-shi, Aichi 448-8671 (JP)
(72) Inventor: YAGI, Daisuke, Kariya-shi, 448-8671 (JP)
(74) Representative: TBK

(56) References cited:
- JP-A- 2014 201 864
- JP-B2- 3 408 698

## Description

### BACKGROUND ART

The present invention relates to a loom with a fixing device for a support body.

In an air jet loom, for example, multiple kinds of parts such as a sub-nozzle and a cable are supported by a support body. The support body is fixed to a sley with a fastening member. For example, Japanese Patent Application Publication No. 2014-201864 discloses a loom with a fixing device for fixing a support body to a sley.

In the fixing device for the support body disclosed in the above-cited Publication, a fastening member includes a T-shaped head portion, a shank portion extending from the T-shaped head portion, and a threaded portion formed on a tip end of the shank portion. The fastening member has a protrusion protruding from the shank portion in a radial direction of the shank portion. The shank portion of the fastening member is inserted through a through hole of the support body.

In the fixing device for the support body, the T-shaped head portion of the fastening member is inserted into a T-shaped groove of the sley through a front surface opening portion of the T-shaped groove. By rotating the fastening member, the T-shaped head portion is engaged with an upper wall and a lower wall of the T-shaped groove. The shank portion inserted through the through hole of the support body is tightened with a nut. Thus, the support body is fixed to the sley.

The protrusion engages with a restriction surface that defines the through hole. This engagement restricts rotation of the T-shaped head portion in a direction that may cause the T-shaped head portion to be escaped out of the front surface opening portion.

In the fixing device for the support body disclosed in the above-cited Publication, the T-shaped head portion of the fastening member is inserted through the front surface opening portion so that a longitudinal direction of the T-shaped head portion is arranged in parallel with a longitudinal direction of the T-shaped groove. Then, the fastening member is rotated so as to engage the T-shaped head portion with the T-shaped groove. At this time, the support body also needs to be rotated together with the fastening member. This may cause the support body to interfere with parts fixed to the sley while the support body is being fixed to the sley. Therefore, fixing the support body to the sley needs to be performed so as not to interfere with the parts attached to the sley.

The present invention has been made in view of the above circumstances and is directed to providing a loom with a fixing device for a support body that improves workability while fixing the support body to the sley.

### SUMMARY

In accordance with an aspect of the present disclosure, there is provided a loom with a fixing device for a support body. The loom includes a sley having a front surface, a rear surface, and a T-shaped groove. The T-shaped groove has a front surface opening portion that is opened at the front surface and a groove that is located closer to the rear surface than the front surface opening portion is. The fixing device includes a fastening member and the support body. The fastening member has a T-shaped head portion to be inserted into the T-shaped groove and placed in the groove, a shank portion extending from the T-shaped head portion, and a threaded portion formed on a tip end of the shank portion. The support body is configured to support an object to be supported, and has a facing surface facing the front surface on one side of the support body in a thickness direction of the support body and a through hole extending through the support body in the thickness direction. The T-shaped head portion is placed in an engagement state in which the T-shaped head portion is engaged with an upper wall and a lower wall of the groove when the fastening member is rotated by a predetermined angle in an engagement direction in a state where the T-shaped head portion is inserted through the front surface opening portion into the groove, the facing surface faces the front surface of the sley, and the threaded portion is inserted through the through hole of the support body. The threaded portion is tightened with a nut to cause the sley to be held between the support body and the T-shaped head portion so that the support body is fixed to the sley. The fastening member includes a protrusion protruding from the shank portion in a radial direction of the shank portion. The support body includes a restriction surface configured to restrict rotation of the T-shaped head portion in a direction opposite to the engagement direction with the restriction surface engaged with the protrusion in the engagement state. The support body includes a guide surface connecting the facing surface to the restriction surface. The guide surface is configured to guide the protrusion so that the T-shaped head portion rotates in the engagement direction when the threaded portion is tightened with the nut.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the embodiments together with the accompanying drawings in which:
FIG. 1 is a perspective view of an air jet loom with a fixing device for a support body;
FIG. 2 is a section view taken along a line 2-2 illustrated in FIG. 1;
FIG. 3 is a front view illustrating a state where the support body is fixed to a sley;
FIG. 4 is a side view of a fastening member and a nut;
FIG. 5 is a front view of the fastening member;
FIG. 6 is a front view of the support body;
FIG. 7 is a perspective view of the support body;
FIG. 8 is a schematic diagram illustrating a fastening state of the fastening member and the support body;
FIG. 9 is a schematic diagram illustrating the fastening state of the fastening member and the support body; and
FIG. 10 is a schematic diagram illustrating the fastening state of the fastening member and the support body.

### DETAILED DESCRIPTION OF THE EMBODIMENTS

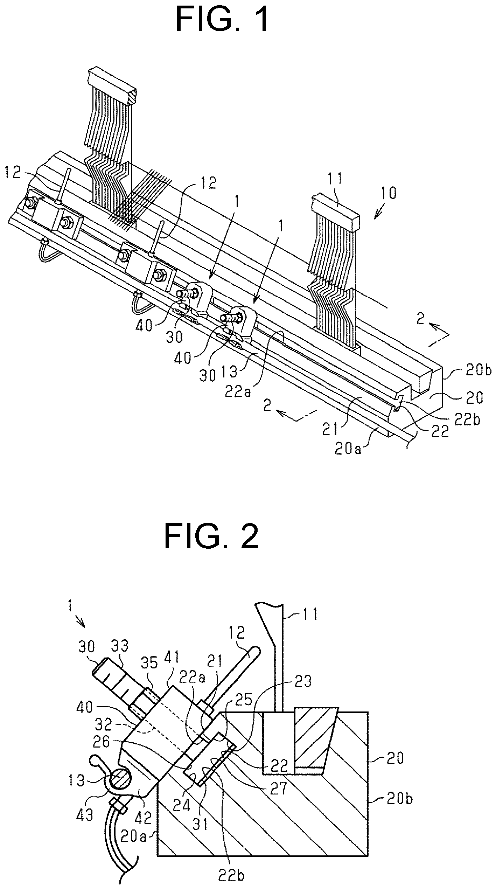

The following will describe an embodiment of a loom with a fixing device for a support body embodied in an air jet loom with a fixing device for a support body with reference to FIGS. 1 to 10. In the description, a right side, a left side, an upper side, and a lower side of FIG. 2 are referred to as a rear side, a front side, an upper side, and a lower side of the air jet loom, respectively.

### <Air jet loom>

As illustrated in FIGS. 1 and 2, an air jet loom 10 includes a reed 11, a sley 20, a main nozzle (not illustrated) for weft insertion, and a plurality of sub-nozzles 12 for weft insertion. The reed 11, the main nozzle (not illustrated) for weft insertion, and the plurality of sub-nozzles 12 for weft insertion are fixed to the sley 20. The air jet loom 10 has a cable 13 routed therethrough.

The air jet loom 10 includes a support body 40 for supporting the cable 13, and a fastening member 30 for fixing the support body 40 to the sley 20. The air jet loom 10 includes a fixing device 1 for the support body 40. The fixing device 1 for the support body 40 includes the support body 40 and the fastening member 30.

### <Sley>

The sley 20 has an inclined surface 21 and a T-shaped groove 22. The inclined surface 21 is located adjacent to a front surface 20a of the sley 20. The sley 20 has a rear surface 20b disposed on a side opposite to the front surface 20a in a short-length direction of the sley 20. In the sley 20, a side on which the reed 11 protrudes is referred to as an upper side of the sley 20, and a side opposite to the upper side is referred to as a lower side of the sley 20. The inclined surface 21 is a flat surface inclined relative to the vertical direction. The inclined surface 21 extends along the entire sley 20 in a longitudinal direction of the sley 20. The T-shaped groove 22 is opened at the inclined surface 21. The T-shaped groove 22 opened at the inclined surface 21 extends along the entire sley in the longitudinal direction of the sley 20.

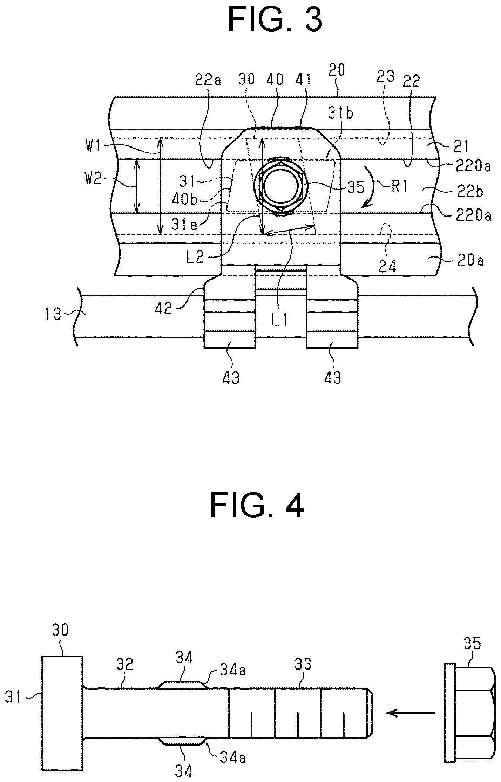

As illustrated in FIGS. 2 and 3, the T-shaped groove 22 has a front surface opening portion 22a and a groove 22b. The T-shaped groove 22 has a T-shape as viewed from an end of the sley 20 in the longitudinal direction of the sley 20. The front surface opening portion 22a is opened at the front surface 20a of the sley 20.

The groove 22b is located closer to the rear surface 20b of the sley 20 than the front surface opening portion 22a is. The groove 22b has an upper wall 23, a lower wall 24, an upper front wall 25, a lower front wall 26, and a rear wall 27. The upper wall 23 and the lower wall 24 are in parallel with each other. The upper front wall 25 and the lower front wall 26 are in parallel with the rear wall 27. A groove width W1 of the groove 22b has a dimension corresponding to a length of the shortest line connecting the upper wall 23 to the lower wall 24.

The front surface opening portion 22a extends from the inclined surface 21 to a middle position between the upper wall 23 and the lower wall 24 in a direction perpendicular to the groove 22b. The front surface opening portion 22a is defined by a pair of opening forming surfaces 220a facing to each other in an up and down direction. An opening width W2 of the front surface opening portion 22a has a dimension corresponding to a length of a shortest line connecting the pair of the opening forming surfaces 220a facing to each other. The opening width W2 is smaller than the groove width W1. The T-shaped groove 22 is formed so as to extend along the entire length of the sley 20.

### <Fastening member>

As illustrated in FIGS. 3, 4, and 5, the fastening member 30 has a T-shaped head portion 31, a shank portion 32, and a threaded portion 33. A direction in which the shank portion 32 of the fastening member 30 extends is referred to as an axial direction of the shank portion 32.

The T-shaped head portion 31 is to be inserted through the front surface opening portion 22a of the T-shaped groove 22 into the groove 22b. The T-shaped head portion 31 has a parallelogram shape as viewed in the axial direction of the shank portion 32. The T-shaped head portion 31 has a pair of short sides 31a and a pair of long sides 31b. A length of the shortest line connecting the pair of long sides 31b to each other is referred to as a first length L1 of the T-shaped head portion 31. A length of the shortest line connecting the pair of short sides 31a to each other is referred to as a second length L2 of the T-shaped head portion 31.

The first length L1 of the T-shaped head portion 31 is slightly smaller than the opening width W2 of the front surface opening portion 22a. This allows the T-shaped head portion 31 to be inserted through the front surface opening portion 22a. A position where the T-shaped head portion 31 is inserted into the groove 22b through the front surface opening portion 22a is referred to as an insertion position of the fastening member 30.

The second length L2 of the T-shaped head portion 31 is greater than the opening width W2 of the front surface opening portion 22a and slightly smaller than the groove width W1 of the groove 22b. This allows one of the short sides 31a to be engaged with the upper wall 23 and the other of the short sides 31a to be engaged with the lower wall 24 when the T-shaped head portion 31 rotates around an axial center of the shank portion 32 by a predetermined angle after the T-shaped head portion 31 is inserted into the groove 22b of the T-shaped groove 22. In this way, the T-shaped head portion 31 is placed in an engagement state. The engagement state refers to a state where the T-shaped head portion 31 is engaged with an inner surface of the groove 22b. A direction in which the fastening member 30 is rotated so that the T-shaped head portion 31 is engaged with the inner surface of the groove 22b and placed in the engagement state is referred to as an engagement direction R1.

The shank portion 32 extends from the T-shaped head portion 31. A diameter of the shank portion 32 is slightly smaller than the opening width W2. This allows the shank portion 32 to be inserted through the front surface opening portion 22a. The shank portion 32 has two protrusions 34. The two protrusions 34 protrude from an outer peripheral surface of the shank portion 32 in a radial direction of the shank portion 32. Thus, the fastening member 30 has the protrusions 34 protruding from the shank portion 32 in the radial direction of the shank portion 32. Each of the two protrusions 34 has a thin plate shape a longitudinal side of which extends in the axial direction of the fastening member 30. The protrusion 34 is disposed between the T-shaped head portion 31 and the threaded portion 33 in the axial direction of the fastening member 30. The protrusion 34 protrudes from the shank portion 32 in a direction perpendicular to the short sides 31a. The two protrusions 34 are disposed opposite to each other across the shank portion 32. The long sides 31b of the fastening member 30 are inclined with respect to protruding directions of the protrusions 34 as viewed in the axial direction of the fastening member 30. Each of the two protrusions 34 has a contact edge 34a at one end of the protrusion 34 in a longitudinal direction thereof close to the threaded portion 33. The contact edge 34a will be described later.

The threaded portion 33 is formed on a tip end of the shank portion 32. The threaded portion 33 can be screwed through a nut 35.

### <Support body>

As illustrated in FIGS. 3, 6, and 7, the support body 40 has a main body 41, a clamp 42, and a through hole 50. The main body 41 has a substantially rectangular parallelepiped block shape.

A direction in which the through hole 50 extends through the support body 40 is referred to as a thickness direction X1 of the support body 40. The main body 41 has a front surface 40a on one side of the main body 41 in the thickness direction X1 and a rear surface 40b on the other side of the main body 41 in the thickness direction X1. The support body 40 is fixed to the sley 20 with the front surface 40a facing the inclined surface 21. The front surface 40a corresponds to a facing surface of the support body 40.

The clamp 42 is disposed below the main body 41. The clamp 42 has two holding portions 43. The holding portions 43 hold the cable 13. Thus, the cable 13 is supported by the support body 40. The cable 13 corresponds to an object to be supported by the support body 40. The holding portions 43 are formed so as to clamp the cable 13 from the rear surface 40b of the support body 40.

### <Through hole>

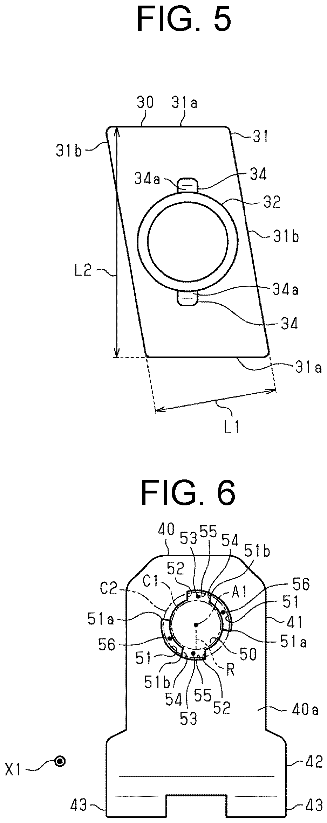

As illustrated in FIG. 6, the through hole 50 extends through the main body 41 of the support body 40. A diameter of the through hole 50 is slightly greater than the diameter of the shank portion 32 and the diameter of the threaded portion 33 of the fastening member 30. The through hole 50 is a hole formed around a central axis A1 and extending along a first imaginary circle C1 having a radius R. A circumferential direction of the first imaginary circle C1 corresponds to a circumferential direction of the support body 40.

### <Restriction surface>

The support body 40 has two restriction surfaces 52. Each of the two restriction surfaces 52 continues to the through hole 50. The restriction surface 52 extends from an intermediate position of the support body 40 in the thickness direction X1 to the rear surface 40b of the support body 40. The restriction surface 52 has a rectangular shape, the longitudinal sides of which extend in the thickness direction X1 of the support body 40. The two restriction surfaces 52 are located substantially opposite to each other across the central axis A1 of the through hole 50.

### <Free space>

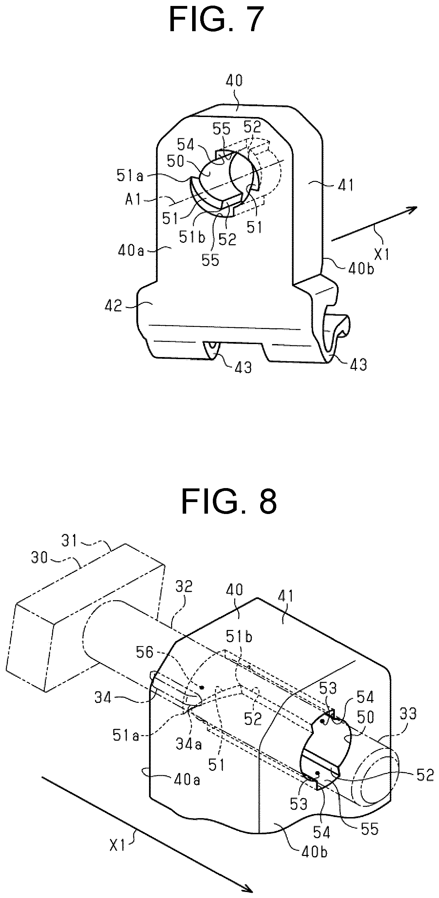

As illustrated in FIGS. 6 and 7, the support body 40 has two free spaces 53 that allow the protrusions 34 to change their positions. Each of the free spaces 53 has a width in the circumferential direction of the support body 40 and extends in the thickness direction X1 of the support body 40. The free spaces 53 are open at the rear surface 40b of the support body 40. The free spaces 53 are a space communicating with the through hole 50. The two free spaces 53 are radially opposite to each other across the through hole 50.

The free spaces 53 are defined by the restriction surfaces 52, two first defining surfaces 54, and two second defining surfaces 55, respectively. Each of the two first defining surfaces 54 extends along the entire length of the support body 40 in the thickness direction X1 of the support body 40. Each of the first defining surfaces 54 connects the front surface 40a to the rear surface 40b of the support body 40. Each of the first defining surfaces 54 has a rectangular shape, the longitudinal sides of which extend in the thickness direction X1 of the support body 40. The two first defining surfaces 54 are disposed substantially opposite to each other across the central axis A1 of the through hole 50. The restriction surfaces 52 are spaced from their associated first defining surfaces 54 in the circumferential direction of the support body 40.

Each of the two second defining surfaces 55 connects the restriction surface 52 to the first defining surface 54 adjacent to the restriction surface 52 in the circumferential direction of the support body 40. Each of the second defining surfaces 55 extends in the thickness direction X1 of the support body 40. An imaginary circle formed around the central axis A1 and extending along the two second defining surfaces 55 when the support body 40 is viewed in the thickness direction X1 is defined as a second imaginary circle C2. A diameter of the second imaginary circle C2 is greater than that of the first imaginary circle C1. The two second defining surfaces 55 are disposed substantially opposite to each other across the central axis A1 of the through hole 50. Each of the free spaces 53 is a space outwardly recessed from the through hole 50.

### <Guide surface>

The support body 40 has two guide surfaces 51. Each of the two guide surfaces 51 continues to the through hole 50. The guide surface 51 connects the front surface 40a of the support body 40 to the restriction surface 52. The guide surface 51 extends from the front surface 40a of the support body 40 to an intermediate position of the support body 40 in the thickness direction X1. Each of the guide surfaces 51 extends from the front surface 40a of the support body 40 in the circumferential direction of the support body 40 toward a center of the support body 40 in the thickness direction X1. Each of the guide surfaces 51 is a spiral surface extending spirally around the central axis A1.

Each of the guide surfaces 51 has a first end 51a connected to the front surface 40a of the support body 40, and a second end 51b to its associated restriction surface 52. Each of the first ends 51a of the guide surfaces 51 is disposed at a position displaced from the corresponding second end 51b by approximately 90 degrees in a circumferential direction of the through hole 50.

The support body 40 has open spaces 56. Each of the open spaces 56 is a space extending from the front surface 40a to the guide surface 51 in the thickness direction X1 of the support body 40. Each of the open spaces 56 communicates with its associated free space 53.

The contact edges 34a of the two protrusions 34 are contactable with their associated guide surfaces 51. The two protrusions 34 are insertable into the respective free spaces 53.

### <Method of fixing support body to sley and operation thereof>

The following will describe a method of fixing the support body 40 to the sley 20 and operations thereof. The method and the operations will be described with reference to FIGS. 8, 9, and 10 in which the nut 35 is not illustrated for the sake of illustration.

First, an operator places the cable 13 to be held by the holding portions 43 of the support body 40. Then, the operator arranges the T-shaped head portion 31 so that the long sides 31b of the T-shaped head portion 31 are in parallel with the opening forming surfaces 220a of the front surface opening portion 22a. The operator moves the fastening member 30 toward the sley 20 and inserts the T-shaped head portion 31 through the front surface opening portion 22a into the groove 22b. The position of the T-shaped head portion 31 at this time corresponds to the insertion position of the fastening member 30.

At the insertion position, the long sides 31b of the T-shaped head portion 31 are substantially in parallel with the upper wall 23 and the lower wall 24 as indicated with chain double-dashed lines in FIG. 3. At the insertion position of the T-shaped head portion 31, the shank portion 32 is supported on the opening forming surface 220a. At the insertion position of the T-shaped head portion 31, the two protrusions 34 protrude from the shank portion 32 in the longitudinal direction of the sley 20.

As illustrated in FIG. 8, the operator inserts the shank portion 32 and the threaded portion 33 through the through hole 50 so that the threaded portion 33 project out from the rear surface 40b of the support body 40. The support body 40 is arranged so that the holding portions 43 of the support body 40 are positioned below the main body 41. In other words, the support body 40 is brought to a position to be attached to the sley 20. At this time, the contact edges 34a of the two protrusions 34 face the open spaces 56. The two protrusions 34 are located closer to the sley 20 than the front surface 40a of the support body 40 is.

In the above description, the support body 40 is assembled with the fastening member 30 after the T-shaped head portion 31 is inserted into the T-shaped groove 22. However, inserting the T-shaped head portion 31 and assembling the support body 40 need not be performed in this order. The T-shaped head portion 31 may be inserted into the T-shaped groove 22 after the shank portion 32 and the threaded portion 33 are inserted through the through hole 50, the threaded portion 33 is protruded from the rear surface 40b of the support body 40, and the support body 40 is assembled with the fastening member 30.

Subsequently, the operator screws the nut 35 onto the threaded portion 33 projected out from the support body 40 and tighten the threaded portion 33 with the nut 35, so that the fastening member 30 is moved into the nut 35. At this time, with the contact edges 34a of the respective protrusions 34 being in sliding contact with the guide surfaces 51, part of a linear movement of the fastening member 30 in the axial direction is converted into rotation. In other words, tightening the nut 35 causes the guide surfaces 51 to guide the protrusions 34. As a result, the T-shaped head portion 31 rotates in the engagement direction R1, and the protrusions 34 are placed in the open spaces 56.

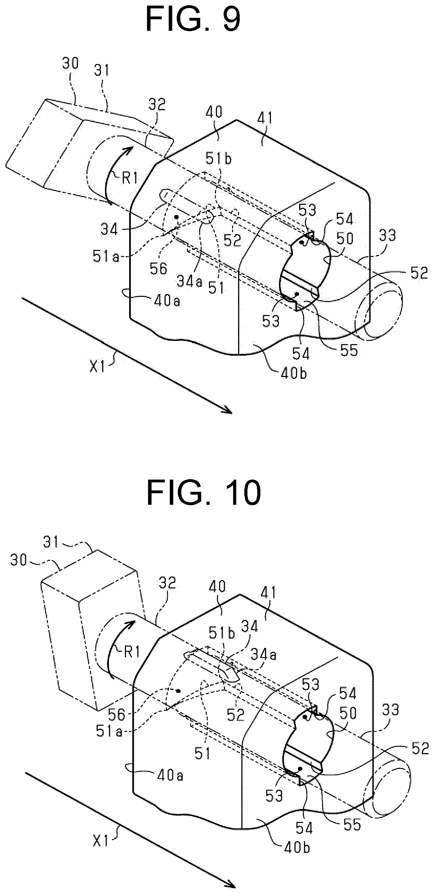

As illustrated in FIG. 10, the protrusions 34 reach the restriction surfaces 52 after the fastening member 30 rotates by a predetermined angle. Then, the threaded portion 33 is further tightened with the nut 35, so that the fastening member 30 linearly moves along the restriction surfaces 52. As a result, the T-shaped head portion 31 approaches the upper front wall 25 and the lower front wall 26.

At the same time, the fastening member 30 linearly moves in the axial direction of the fastening member 30 so that the fastening member 30 is spaced away from the guide surfaces 51. The protrusions 34 move in the free spaces 53 so that the protrusions 34 are spaced away from the guide surfaces 51. When the fastening member 30 is placed in the engagement state, the protrusions 34 are positioned adjacent to the restriction surfaces 52, which restricts the rotation of the fastening member 30 in a direction opposite to the engagement direction R1. Then, the threaded portion 33 is tightened with the nut 35 even further, so that the T-shaped head portion 31 comes in contact with the upper front wall 25 and the lower front wall 26. As a result, the sley 20 is held between the T-shaped head portion 31 and the support body 40, so that the support body 40 is fixed to the sley 20.

### <Advantageous effect of embodiment>

The following will describe advantageous effects of the present embodiment.
(1) The support body 40 has the restriction surfaces 52 and the guide surfaces 51. In this configuration, when the threaded portion 33 is tightened with the nut 35, the fastening member 30 is moved into the nut 35. At this time, the protrusions 34 are guided along the guide surfaces 51, and part of the linear movement of the fastening member 30 in the axial direction is converted into rotation. This causes the T-shaped head portion 31 to rotate in the engagement direction R1.
   After the fastening member 30 rotates by the predetermined angle, the protrusions 34 reach the restriction surfaces 52. Further tightening the threaded portion 33 with the nut 35 causes the fastening member 30 to move linearly along the restriction surfaces 52, and the T-shaped head portion 31 to approach the sley 20.
   At the same time, the fastening member 30 linearly moves in the axial direction of the fastening member 30 so that the fastening member 30 is spaced away from the guide surfaces 51. When the fastening member 30 is placed in the engagement state, the protrusions 34 are positioned adjacent to the restriction surfaces 52, which restricts the rotation of the fastening member 30 in a direction opposite to the engagement direction R1. When the threaded portion 33 is tightened with the nut 35 even further, the sley 20 is held between the support body 40 and the T-shaped head portion 31, so that the support body 40 is fixed to the sley 20.
   According to the fixing device 1 for the support body 40, simply tightening the threaded portion 33 with the nut 35 allows the guide surfaces 51 to change only the position of the T-shaped head portion 31 into the engagement state without changing the position of the support body 40. In addition, the restriction surfaces 52 restrict rotation of the fastening member 30 in the direction opposite to the engagement direction R1. As a result, the engagement state is maintained.
   In this way, for example, even while a part is being attached to the sley 20, the support body 40 is unlikely to interfere with other parts attached to the sley 20. Therefore, attachment positions of the other parts need not be changed. As a result, this configuration improves the workability when the support body 40 is fixed to the sley 20.
(2) The guide surfaces 51 are the spiral surfaces extending spirally around the central axis A1 of the through hole 50. This configuration allows the guide surfaces 51 to guide the contact edges 34a of the protrusions 34 more smoothly compared to a case where, for example, the guide surfaces 51 have tapered surfaces. Therefore, this configuration suppresses a force applied to the protrusions 34 when the contact edges 34a of the protrusions 34 are in sliding contact with the guide surfaces 51. As a result, reliability of the guide surfaces 51 in guiding the protrusions 34 may be improved.
(3) According to the fixing device 1 for the support body 40, simply tightening the threaded portion 33 with the nut 35 allows the guide surfaces 51 to change only the position of the T-shaped head portion 31 into the engagement state without changing the position of the support body 40. In other words, simply tightening the threaded portion 33 with the nut 35 accomplishes changing the position of the T-shaped head portion 31, restricting the rotation of the T-shaped head portion 31 in the direction opposite to the engagement direction R1, and fixing the support body 40 to the sley 20. As a result, the fixing device 1 for the support body 40 further improves the workability o when the support body 40 is fixed to the sley 20.
(4) The support body 40 has the clamp 42 below the main body 41. The support body 40 is a member having a relatively large dimension between the through hole 50 and the clamp 42. If the position of such a support body 40 is changed rotationally around the central axis A1, the support body 40 having a large radius of rotation is likely to interfere with the other parts. However, the fixing device 1 for the support body 40 does not change the position of the support body 40, which is enormously effective to the support body 40 having the relatively large dimension between the through hole 50 and the clamp 42.

### <Modifications>

The embodiment according to the present invention may be modified as follows. The above-described embodiment and the following modifications may be implemented in combination with each other within a technically consistent range.

The guide surfaces 51 may be spiral grooves that extend from the front surface 40a to the restriction surfaces 52. In this case, the open spaces 56 are not formed, and the protrusions 34 have columnar shapes insertable into the spiral grooves.

The guide surfaces 51 may be inclined surfaces that extend from the front surface 40a to the restriction surfaces 52.

The shape of the protrusions 34 is not limited to any particular shape as long as the protrusions 34 are able to be in sliding contact with the guide surfaces 51.

The fastening member 30 may only have a single protrusion 34. In this case, the number of the guide surfaces 51 may be only one, or two.

The object to be supported by the support body 40 is not limited to the cable, but may be, for example, a sub-nozzle or a weft feeler.

The loom is not limited to the air jet loom, but may be a water jet loom, a rapier loom, or a projectile loom.
There is provided a loom (10) with a fixing device (1) for a support body (40). The fixing device (1) includes a fastening member (30) and the support body (40). The fastening member (30) includes a protrusion (34) protruding from a shank portion (32) in a radial direction (R) of the shank portion (32). The support body (40) includes a restriction surface (52) and a guide surface (51). The restriction surface (52) is configured to restrict rotation of a T-shaped head portion (31) in a direction opposite to an engagement direction (R1) with the restriction surface (52) engaged with the protrusion (34). The guide surface (51) connects the facing surface (40a) to the restriction surface (52). The guide surface (51) guides the protrusion (34) so that the T-shaped head portion (31) rotates in the engagement direction (R1) when the threaded portion (33) is tightened with the nut (35).

## Claims

1. A loom (10) with a fixing device (1) for a support body (40), the loom (10) including a sley (20) having a front surface (20a), a rear surface (20b), and a T-shaped groove (22), the T-shaped groove (22) having a front surface opening portion (22a) that is opened at the front surface (20a) and a groove (22b) that is located closer to the rear surface (20b) than the front surface opening portion (22a) is, the fixing device (1) comprising:
a fastening member (30) having a T-shaped head portion (31) to be inserted into the T-shaped groove (22) and placed in the groove (22b), a shank portion (32) extending from the T-shaped head portion (31), and a threaded portion (33) formed on a tip end of the shank portion (32); and
the support body (40) configured to support an object to be supported, and having a facing surface (40a) facing the front surface (20a) on one side of the support body (40) in a thickness direction (X1) of the support body (40) and a through hole (50) extending through the support body (40) in the thickness direction (X1),
wherein the T-shaped head portion (31) is placed in an engagement state in which the T-shaped head portion (31) is engaged with an upper wall (23) and a lower wall (24) of the groove (22b) when the fastening member (30) is rotated by a predetermined angle in an engagement direction (R1) in a state where the T-shaped head portion (31) is inserted through the front surface opening portion (22a) into the groove (22b), the facing surface (40a) faces the front surface (20a) of the sley (20), and the threaded portion (33) is inserted through the through hole (50) of the support body (40),
wherein the threaded portion (33) is tightened with a nut (35) to cause the sley (20) to be held between the support body (40) and the T-shaped head portion (31) so that the support body (40) is fixed to the sley (20),
wherein the fastening member (30) includes a protrusion (34) protruding from the shank portion (32) in a radial direction of the shank portion (32), and
wherein the support body (40) includes a restriction surface (52) configured to restrict rotation of the T-shaped head portion (31) in a direction opposite to the engagement direction (R1) with the restriction surface (52) engaged with the protrusion (34) in the engagement state, **characterized in that**
the support body (40) includes a guide surface (51) connecting the facing surface (40a) to the restriction surface (52), and
the guide surface (51) is configured to guide the protrusion (34) so that the T-shaped head portion (31) rotates in the engagement direction (R1) when the threaded portion (33) is tightened with the nut (35).

2. The loom (10) with the fixing device (1) for the support body (40) according to claim 1, **characterized in that**
the guide surface (51) includes a spiral surface extending spirally around a central axis (A1) of the through hole (50).

## Patentansprüche

1. Webstuhl (10) mit einer Fixiervorrichtung (1) für einen Stützkörper (40), wobei der Webstuhl (10) einen Schlitten (20) umfasst, der eine Vorderfläche (20a), eine Hinterfläche (20b) und eine T-förmige Nut (22) hat, wobei die T-förmige Nut (22) einen Vorderflächenöffnungsabschnitt (22a), der an der Vorderfläche (20a) geöffnet ist, und eine Nut (22b) hat, die näher bei der Hinterfläche (20b) liegt als der Vorderflächenöffnungsabschnitt (22a), wobei die Fixiervorrichtung (1) aufweist:
ein Befestigungselement (30), das einen T-förmigen Kopfabschnitt (31), der in die T-förmige Nut (22) einzusetzen und in der Nut (22b) zu platzieren ist, einen Schaftabschnitt (32), der sich von dem T-förmigen Kopfabschnitt (31) erstreckt, und einen Gewindeabschnitt (33) hat, der an einem Spitzenende des Schaftabschnitts (32) ausgebildet ist; und
den Stützkörper (40), der dazu gestaltet ist, ein zu stützendes Objekt zu stützen, und eine zugewandte Fläche (40a), die der Vorderfläche (20a) an einer Seite des Stützkörpers (40) in einer Dickenrichtung (X1) des Stützkörpers (40) zugewandt ist, und ein Durchgangsloch (50) hat, das sich durch den Stützkörper (40) in der Dickenrichtung (X1) erstreckt,
wobei der T-förmige Kopfabschnitt (31) in einem Eingriffszustand platziert wird, bei dem der T-förmige Kopfabschnitt (31) mit einer oberen Wand (23) und einer unteren Wand (24) der Nut (22b) in Eingriff ist, wenn das Befestigungselement (30) um einen vorbestimmten Winkel in einer Eingriffsrichtung (R1) in einem Zustand gedreht wird, bei dem der T-förmige Kopfabschnitt (31) durch den Vorderflächenöffnungsabschnitt (22a), in die Nut (22b) eingesetzt ist, die zugewandte Fläche (40a) der Vorderfläche (20a) des Schlittens (20) zugewandt ist und der Gewindeabschnitt (33) durch das Durchgangsloch (50) des Stützkörpers (40) eingesetzt ist,
wobei der Gewindeabschnitt (33) mit einer Mutter (35) festgezogen wird, um den Schlitten (20) dazu zu veranlassen, zwischen dem Stützkörper (40) und dem T-förmigen Kopfabschnitt (31) gehalten zu werden, sodass der Stützkörper (40) an dem Schlitten (20) fixiert ist,
wobei das Befestigungselement (30) einen Vorsprung (34) umfasst, der von dem Schaftabschnitt (32) in einer Radialrichtung des Schaftabschnitts (32) vorsteht, und
wobei der Stützkörper (40) eine Begrenzungsfläche (52) umfasst, die dazu gestaltet ist, eine Drehung des T-förmigen Kopfabschnitts (31) in einer zu der Eingriffsrichtung (R1) entgegengesetzten Richtung zu begrenzen, mit der Begrenzungsfläche (52) in Eingriff mit dem Vorsprung (34) in dem Eingriffszustand, **dadurch gekennzeichnet, dass**
der Stützkörper (40) eine Führungsfläche (51) umfasst, die die zugewandte Fläche (40a) mit der Begrenzungsfläche (52) verbindet, und
die Führungsfläche (51) dazu gestaltet ist, den Vorsprung (34) zu führen, sodass sich der T-förmige Kopfabschnitt (31) in der Eingriffsrichtung (R1) dreht, wenn der Gewindeabschnitt (33) mit der Mutter (35) festgezogen wird.

2. Webstuhl (10) mit der Fixiervorrichtung (1) für den Stützkörper (40) gemäß Anspruch 1, **dadurch gekennzeichnet, dass**
die Führungsfläche (51) eine Spiralfläche umfasst, die sich spiralig um eine Zentralachse (A1) des Durchgangslochs (50) erstreckt.

## Revendications

1. Métier à tisser (10) avec un dispositif de fixation (1) pour un corps de support (40), le métier à tisser (10) comprenant un battant (20) ayant une surface avant (20a), une surface arrière (20b) et une rainure en forme de T (22), la rainure en forme de T (22) ayant une partie d'ouverture de surface avant (22a) qui est ouverte sur la surface avant (20a) et une rainure (22b) qui est située plus près de la surface arrière (20b) que ne l'est la partie d'ouverture de surface avant (22a), le dispositif de fixation (1) comprenant :
un élément de fixation (30) comportant une partie de tête en forme de T (31) destinée à être insérée dans la rainure en forme de T (22) et placée dans la rainure (22b), une partie de tige (32) s'étendant à partir de la partie de tête en forme de T (31), et une partie filetée (33) formée sur une extrémité de pointe de la partie de tige (32) ; et
le corps de support (40) configuré pour supporter un objet à supporter, et ayant une surface de parement (40a) faisant face à la surface avant (20a) sur un côté du corps de support (40) dans une direction d'épaisseur (X1) du corps de support (40) et un trou de passage (50) s'étendant à travers le corps de support (40) dans la direction d'épaisseur (X1),
dans lequel la partie de tête en forme de T (31) est placée dans un état d'engagement dans lequel la partie de tête en forme de T (31) est engagée avec une paroi supérieure (23) et une paroi inférieure (24) de la rainure (22b) lorsque l'élément de fixation (30) est tourné d'un angle prédéterminé dans une direction d'engagement (R1) dans un état où la partie de tête en forme de T (31) est insérée à travers la partie d'ouverture de la surface avant (22a) dans la rainure (22b), la surface de parement (40a) fait face à la surface avant (20a) du battant (20), et la partie filetée (33) est insérée à travers le trou de passage (50) du corps de support (40),
dans lequel la partie filetée (33) est serrée avec un écrou (35) pour faire en sorte que le battant (20) soit maintenu entre le corps de support (40) et la partie de tête en forme de T (31) de sorte que le corps de support (40) soit fixé au battant (20),
dans lequel l'élément de fixation (30) comporte une protubérance (34) faisant saillie de la partie de tige (32) dans une direction radiale de la partie de tige (32), et
dans lequel le corps de support (40) comporte une surface de restriction (52) configurée pour restreindre la rotation de la partie de tête en forme de T (31) dans une direction opposée à la direction d'engagement (R1) avec la surface de restriction (52) engagée avec la protubérance (34) dans l'état d'engagement, **caractérisé en ce que**
le corps de support (40) comporte une surface de guidage (51) reliant la surface de parement (40a) à la surface de restriction (52), et
la surface de guidage (51) est configurée pour guider la protubérance (34) de sorte que la partie de tête en forme de T (31) tourne dans la direction d'engagement (R1) lorsque la partie filetée (33) est serrée avec l'écrou (35).

2. Le métier à tisser (10) avec le dispositif de fixation (1) du corps de support (40) selon la revendication 1, **caractérisé en ce que**
la surface de guidage (51) comporte une surface en spirale s'étendant en spirale autour d'un axe central (A1) du trou de passage (50).
